# EUROPEAN PATENT APPLICATION

(11) **EP 2 388 240 A1**
(43) Date of publication of application: **23.11.2011**
(21) Application number: 08879270.0
(22) Date of filing: 29.12.2008
(51) Int. Cl.: C04B 24/40

(54) **HYDRAULIC CEMENT COMPRISING ORGANOSILICON NANOPARTICLES**

(71) Applicant: Fundacion Labein, 48160 Derio, Vizcaya (ES)
(72) Inventor: DE MIGUEL, Yolanda Rufina, E-48600 Sopelana (Bizkaia) Bilbao (ES); BERRIOZABAL SOLANA, Gemma, E-48011 Bilbao (Bizkaia) (ES); PORRO GUTIERREZ, Antonio, Getxo (Bizkaia) Bilbao (ES)
(74) Representative: Gonzalez-Alberto Rodriguez, Natalia
(86) International application number: PCT/ES2008/000808
(87) International publication number: WO 2010/076344

(57) **Abstract**

Hydraulic cement comprising organosilicon nanoparticles. The present invention relates to obtaining a cement with improved properties, particularly strength, owing to the incorporation of organosilicon molecules, and to the uses thereof. For this purpose, the invention relates to a method for obtaining said organosilicon molecules, specifically containing amine groups, and the addition thereof to cement in nanoparticulate form, yielding an improved hydraulic cement in comparison with conventional Portland Cement.

## Description

### Technical Sector of the Invention

The present invention relates to obtaining a cement with improved properties, particularly strength, owing to the incorporation of organosilicon molecules, and to the uses thereof.

For this purpose, the invention relates to a method for obtaining said organosilicon molecules, specifically containing amine groups, and the addition thereof to cement in nanoparticulate form, yielding an improved hydraulic cement in comparison with conventional Portland Cement.

### Background of the Invention

In a more general sense, cement is known a binder or binding agent, concrete is a substance that sets independently and which can also create with other materials (aggregates, gravel or sand and water) a uniform manageable plastic mixture capable of setting and hardening upon reacting with water, thereby acquiring a rocky consistency. There are various types of cement which are different in their composition, strength and durability properties, so their uses are different as well.

The most significant use of cement is in construction and although there are cements of different types the most significant are those known as hydraulic cements that set and harden upon combining them with water and which, after hardening, maintain their hardness and stability even under water. To that end, it is necessary that the hydrates formed through reaction with the water are essentially water insoluble.

Today most of the cements used in construction are hydraulic cements and they are generally based on Portland cement. This cement was invented in 1824 in England by the builder Joseph Aspdin and its name is due to the similarity it has in term of its appearance with the rocks found in Portland Island of Dorset County. Cement is manufactured in three phases: (i) Preparation of the raw materials which are generally minerals containing approximately calcium oxide (44%), silicon oxide (14.5 %) and aluminium oxide, iron oxide and manganese oxide in a lower proportion (1 to 4%), (ii) production of clinker; and (iii) preparation of cement.

Cement-based materials are the most significant of all construction materials both due to their applicability and due to the amount produced (the yearly concrete production is equivalent to 1 m³/person, about 300 kg of cement being required [1]). There are different types of cement-based materials among which concrete and fiber reinforced cement composites stand out. These are formed by a binder matrix (hydrated Portland cement) together with aggregates and/or fibers. The aggregates are typically rocky materials, whereas the sand is usually calcareous or siliceous. Finally, the fibers can be of a different nature, for example, the most common fibers are steel fibers or carbon fibers.

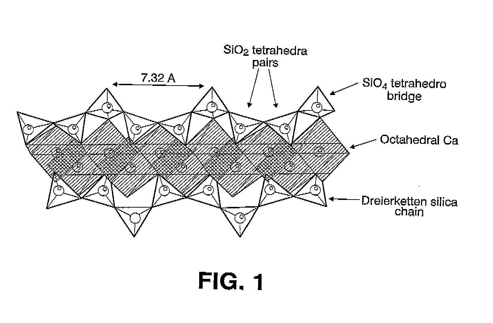

The C-S-H (C= CaO, S= SiO₂ and H= H₂O) gel is the common notation in cement chemistry because C-S-H refers to calcium silicate hydrates and it is written without subscripts due to the variable composition of these hydration products by weight in the cement matrix. It is without a doubt the most significant of all cement hydration products, it being the real cementing element of the cement pastes, in which the remaining hydration products can be found. Despite its main role, many of the aspects related with its structure are still unknown. Figure 1 depicts the structure thereof in a very simplified manner consisting of silicate chains intercalated by layers of calcium oxides.

By means of the ²⁹Si NMR (nuclear magnetic resonance) technique, it has been shown that in C-S-H gel (Figure 1) the silicate chains have a geometry which is know as Dreierketten in the literature, in which the structure is repeated in intervals of 3 SiO tetrahedra [2] which is a virtually universal occurrence in all calcium silicates. Additionally, ²⁹Si NMR and gas liquid chromatography (GLC), gel chromatography (GPC), mass spectroscopy and chemical analysis have determined that only certain lengths are possible [2-6]. In fact, empirically it has been found that the chains follow the m=3n-1 rule, wherein m represents the number of silicons in the chain and n is an integer. Recently in a theoretical paper presented by the authors of the present invention, said experimental observation has been explained and the fundamentals for the growth of said chains were clarified [7-9].

The development of high performance cement-based materials (i.e., with high strength and durability) is one of the greatest challenges of the construction sector. Traditionally, said materials must be designed from the macroscopic point of view and the following lines must have been developed to improve the performance of concrete: (i) the search for high compactness (by means of dosages with low water/cement ratios, the use of superplasticizers, the addition of silica fume and extremely hard aggregates), (ii) the modification of pastes with polymers (polymerization fills the holes of the concrete), and finally (iii) the addition of fibers (giving rise to mechanical strengths under compression greater than 150 MPa and an improvement in ductility) [10]. These final results are good for concrete engineering but are insufficient when questions as to why and how the degradation phenomena affecting the durability and reliability happen or as to how the load transfers between the fibers and cement matrix are produced are to be answered from a multiscale approach. It is also insufficient when improving the eco-efficiency of these materials is desired since only macroscopic parameters are taken into account, whereas the intrinsic multiscale representation of the materials under study (from the nanoscale) on which the optimization possibilities both for the production and for the performance efficiency and lesser use of the material rely is not preferably considered.

Nanotechnology has still not significantly affected the field of cement composites. Up until now, silica has been the only material considered by the cement industry in a state close to nanometric. This material, which plays a significant role in the production of high performance cements, has been used mainly in the form of microsilica or silica fume [11] (the diameters of which are in the order of 100 nm to 1 micron). The spherical nanosilica having truly nanometric diameters (< 100 nm) which can be in both agglomerate and suspension form stabilized by a dispersant (colloidal silica) has been much less used and when it was used it has been used focusing mainly on aspects such as rheology and workability.

Chandra *et al.* [12] studied the interaction of this nanosilica with Portland cement by using X-ray diffraction and thermogravimetric analyses and showed that the reactivity of colloidal silica is greater than that of silica fume and that the addition of a small amount of this nanometric silica is in fact sufficient to produce the same pozzolanic effect as with the addition of a greater doses of silica fume (at early ages).

Likewise, in a rheological properties study [13] of grouts containing colloidal silica by comparing them with those of conventional silica fume, it was found that the new formulation showed a complete absence of segregation and that at 28 days the mechanical strengths reached the values of 100 Mpa. Prior to that, Bjordal [14] had described that colloidal silica considerably improved the rheology and stability in cementing operations performed in the North Sea.

Likewise, patent document WO 01/98227 A1 describes a highly fluid cement containing colloidal silica with superplasticizers of the polycarboxylate family that could be used as self-compacting cement.

Several patent documents have described various additives for cement conferring to it certain features and particularly improving its strength, although generally very few organic additives have been used for such purposes.

Patent document US 4,401,472, for example, describes a method for increasing the compressive strength of hardened hydraulic cement mixtures (preferably Portland cement) to which poly(hydroxyalkylated)polyethyleneamine or poly(hydroxyalkylated)polyethylamine, or a mixture of both at a temperature of 0°C to 50°C, and document US 7,160,384 B2 describes a cement comprising a mixture of amine and diamine which increases the efficiency in the cement grinding process.

Henri Van Damme *et al.* [15] study the comparison of calcium silicate hydrate (C-S-H), the most important product produced from the reaction of Portland cement with water, giving as a result lattice shaped layers which have a lot in common with the smectite clays, establishing that the nanocomposites, the layers of which are separated and distributed homogenously in the matrix of the mesocomposites in which the polymer does not penetrate into the interlaminar state, are different.

The hybridization of synthetic cement models (synthetic C-S-H gel) has been described in two articles by Minet *et al.* [16, 17] in which the synthetic C-S-H gel type structures were hybridized with organic functionalities. Organic-inorganic hybrids synthesized by means of the sol-gel process are obtained. The materials are obtained by precipitation in alkaline medium from a mixture of trialkylsiloxane and tetraethoxysiloxane diluted in a solution of calcium chloride, ethanol and water. The magnetic resonance data showed that the organic species had not altered the inorganic constitution of the C-S-H.

The article by Franceschini *et al.* [18] describes the preparation of new C-S-H hybrids with trialkylsilane (T-silane) and/or methyldialkoxysilane (D-silane) molecules also by the sol-gel method.

Patent document WO 03/002633 Al describes the synthesis of organosilica molecules in which silanes such as 3-mercaptopropyl trimethoxysilane with diameters of 1 to 100 µm are used. Fluorescent molecules are used in reactions for the optical tracking thereof in the synthesis of polymers such as nucleic acid, polypeptides and DNA molecules.

Nevertheless, the formation of a hybrid formed by the addition of nanoparticles formed by organic molecules which are silanes containing amine groups in their molecule to a cement matrix has not yet been described.

### Object of the Invention

The object of the present invention is to obtain a cement or cement matrix hybridized with organosilicon molecules containing amine functions in the molecule thereof. To that end a process for obtaining said organosilicon molecules in nanoparticulate form and the addition thereof to cement yielding cement pastes that may be useful for applications of high performance cement, cement with improved mechanical strengths, high durability, improved workability, possibilities of self-repair, etc., is described. Damaging effects caused by the addition of organic compounds to the cement matrices are also prevented.

The present invention achieves obtaining nanosilica functionalized with amine groups. Furthermore, as ethanol inhibits the hydration of cement, ethanol has been removed from the reaction mixture for obtaining said nanoparticles and they have been dried. The nanoparticles have been dispersed in aqueous medium when they were to be used *a posteriori* in the suitable medium for their addition in the cement matrix. Another important factor to be taken into account in the cement addition and which is solved in the following invention is the need for synthesizing a stable dispersion at room temperature.

### Detailed Description of the Invention

The present invention describes the hybridization of cement pastes with organic molecules for their application in the development of improved products derived from cement (concretes, mortars, etc.). To that end, different amounts of nanoparticles functionalized with organic groups have been added to the cement. Specifically silicon nanoparticles functionalized with amine groups have been added. Said particles have been isolated from particle obtaining medium which contained ethanol and have subsequently been redispersed in water for adding them (between 1 and 3 grams) to the cement mixture, an improvement (of up to 20 %) being observed in the mechanical properties of the hybrid cement pastes obtained with respect to those of conventional Portland cement.

Therefore, the present invention is performed in two steps, the first step consisting of obtaining silica nanoparticles with amine functionality purified and redispersed in water and the second step consisting of the hybridization thereof with the cement matrix.

### Nanoparticle hybrids.

### 1.- Synthesis of nanoparticles.

The nanoparticles have been synthesized by the Stöber method (completely different from the Van Damme pathway) which consists of a series of chemical reactions allowing the synthesis of spherical particles of uniform size by means of silicate hydrolysis and condensation in an ethanol solution using ammonium hydroxide as a catalyst. In this case the Sol-Gel reaction was carried out between tetraethoxysilane (TEOS) and aminopropyltriethoxysilane (APTES) at a ratio of 9:1 by weight using ammonium hydroxide as a catalyst.

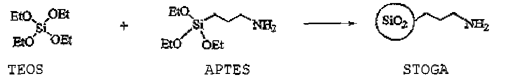

### Synthesis of silica nanoparticles with amine functionality (STOGA)

The obtained nanoparticles have been mainly characterized by means of ESEM, AFM, XRD, measurements of Zeta potential, FT-IR, etc., concluding that the nanoparticles have a size of 221 nm and are stable in the reaction mixture, the presence of the amine group being confirmed by means of the positive bromophenol blue test.

### 2. Redispersion of silica nanoparticles with amine functionality (STOGA),

The nanoparticles have been centrifuged and treated with ultrasounds once obtained to completely remove the possible ethanol. They where then dried and dispersed in water, confirming that their structure has not been altered by means of a ZetaSizer.

### 3. Use of STOGA nanoparticles as an additive for cement pastes

The nanoparticles have been used as an additive being incorporated into the cement matrix by means of a dispersion of silica nanoparticles with amine functionality (STOGA) to Portland type cement. 0 (blank), 1 , 2 and 3 grams by dry weight have been incorporated. The blank and the mixture of 2 grams were characterized by XRD at 7 and 28 days. ²⁹Si-NMR measurements were also taken at 28 days for all the mixtures and measurements of breaks under compression were taken at 7 and 28 days. At 28 days the mixture with 3 grams of STOGA was about 20% stronger than the blank.

The hybrid pastes will mainly be characterized by means of ESEM (environmental scanning electron microscopy) to study the morphology in microscale, energy-dispersive X-ray spectroscopy (EDAX) microanalysis to study the distribution of chemical elements in the materials, XRD (X-ray diffraction) to determine the crystal phases, FT-IR (infrared spectrometry) to study the chemical composition, NMR (nuclear magnetic resonance) to study silicate chain growth, mechanical tests (bending and compression), etc.

### Brief Description of the Drawings

Figure 1 shows the structure of the C-S-H gel in a very simplified manner where the silicate chains intercalated by layers of calcium oxides are observed.
Figure 2 shows the IR spectrum of STOGAIP showing the signals corresponding to the Si-O bond at ∼1110 cm⁻¹ and O-H bond at ∼3400 cm⁻¹ as the main signals.
Figure 3 shows the solid state ²⁹Si-NMR (STOGA) where two signals corresponding respectively to Q₃ (100.422 cm⁻¹) and Q₄ (110.221 cm⁻¹) are mainly observed and they are characteristic of the silicon when the latter is bound to 3 and 4 silicon atoms, respectively, through an oxygen bridge.
Figure 4 shows the solid state ¹³C-NMR (STOGA) where 3 signals corresponding to the 3 carbons of the propyl chain at 9.810 cm⁻¹, 21.561 cm⁻¹ and 42.781 cm⁻¹ are observed.
Figure 5 shows the STOGA environmental scanning electron microscopy (ESEM) (250X).
Figure 6 shows a detail of the STOGA environmental scanning electron microscopy (ESEM) (1000X).
Figure 7 shows the STOGA atomic force microscopy (AFM).
Figure 8 shows a detail of the STOGA atomic force microscopy (AFM).
Figure 9 shows the STOGA transmission electron microscopy (TEM).
Figure 10 shows a detail of the STOGA transmission electron microscopy (TEM).
Figure 11 shows the STOGA X-ray diffraction (XRD) where the non-existence of crystal phases is verified.
Figure 12 shows the graph of the size of the silica nanoparticles with amine functionality (STOGA).
Figure 13 shows a graph of the Z potential of the dispersion of silica nanoparticles with amine functionality (STOGA).
Figure 14 shows the positive bromophenol blue color test.
Figure 15 shows a graph of the size of silica nanoparticles with amine functionality (STOGA).
Figure 16 shows a graph of the Z potential of the dispersion of silica nanoparticles with amine functionality (STOGA).
Figure 17 shows the preparation of the STOGA dispersion in water.
Figure 18 shows a detail of the preparation of the STOGA dispersion in water.
Figure 19 shows the preparation of cement specimens.
Figure 20 shows the preparation of cement specimens.
Figure 21 shows the CSTOGA comparison at 7 and 28 days of mechanical strength readings offered by the cement materials once the functionalized silica nanoparticles were added.
Figure 22 shows the CSTOGA0 X-ray diffraction (XRD) at 7 days of curing.
Figure 23 shows the CSTOGA0 X-ray diffraction (XRD) at 7 days of curing.
Figure 24 shows the CSTOGA2 X-ray diffraction (XRD) at 7 days of curing.
Figure 25 shows the CSTOGA2 X-ray diffraction (XRD) at 7 days of curing.
Figure 26 shows the CSTOGA0 X-ray diffraction (XRD) at 28 days of curing.
Figure 27 shows the CSTOGA0 X-ray diffraction (XRD) at 28 days of curing.
Figure 28 shows the CSTOGA2 X-ray diffraction (XRD) at 28 days of curing.
Figure 29 shows the CSTOGA2 X-ray diffraction (XRD) at 28 days of curing.
Figure 30 shows the solid state ²⁹Si-NMR spectrum of the CSTOGA0 sample.

Figure 31 shows the solid state ²⁹Si-NMR spectrum of the CSTOGA1 sample.
Figure 32 shows the solid state ²⁹Si-NMR spectrum of the CSTOGA2 sample.
Figure 33 shows the solid state ²⁹5i-NMR spectrum of the CSTOGA3 sample.
Figure 34 shows the preparation of cement specimens.
Figure 35 shows the preparation of cement specimens.
Figure 36 shows the CSTOGA comparison at 7 and 28 days of mechanical strength readings offered by the cement materials once the corresponding alkoxysilanes were added.

### Examples

### Example 1: Preparation and characterization of silica nanoparticles with amine functionality (STOGA).

The synthesis of silica nanoparticles with amine functionality (STOGA) was carried out by the Stöber method (19). This method consists of the Sol-Gel reaction between tetraethoxysilane (TEOS) and triethoxyaminopropylsilane (APTES) (9:1 w/w) catalyzed by NH₄OH (see Figure 1).

### Method:

The reagents mentioned below are added in a 250 ml cylinder following the specific order and amounts shown in Table 1 :

**Table 1**

| Reagents | Equivalents |
|---|---|
| 1. Ethanol | 7.55ml/mmol |
| 2.H₂O | 0.15ml/mmol |
| 3. TEOS | 1eq |
| 4. APTES | 0.1eq |
| 5. NH₄OH | 0.072ml/mmol |

Table 1: Order of addition and equivalents necessary for the synthesis of STOGA.

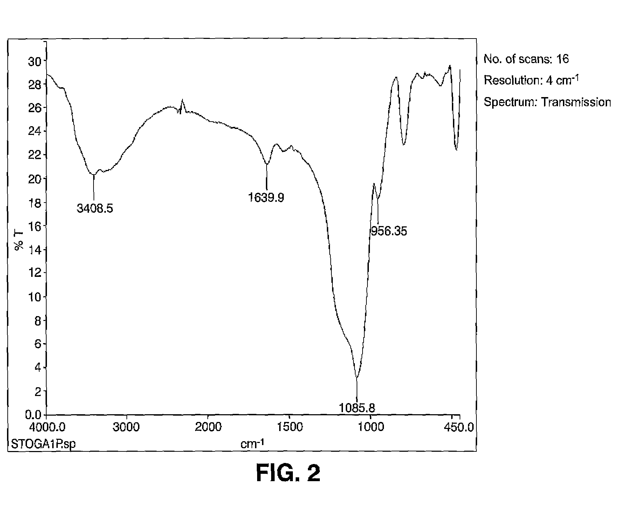

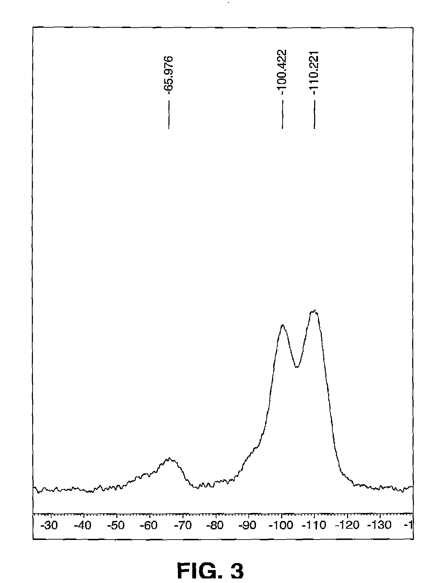

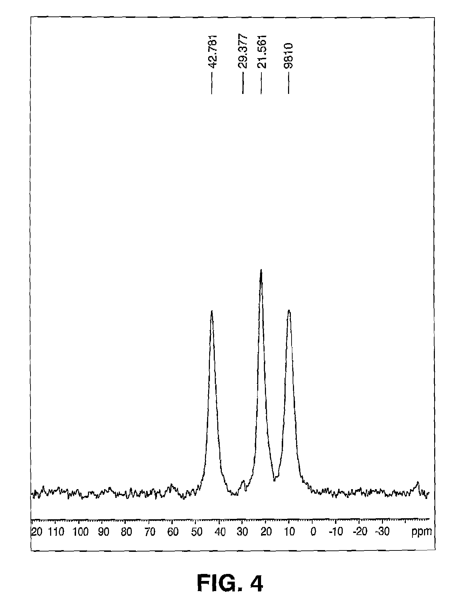

After a few minutes, the solution turns turbid and the reaction ends after 3 days, the functionalized silica nanoparticles dispersed in the reaction medium itself being obtained. The obtained nanoparticles were prepared by centrifugation at 4500 r.p.m, decanting the excess liquid. They were then washed with 50 ml of ethanol with ultrasounds (5 min) and centrifuged again at 4500 r.p.m, repeating this operation 3 times. Finally they were left to dry (evaporating the traces of solvent), giving rise to a white powder. Characterization:
The obtained nanoparticles were characterized by the following techniques:
   - Infrared (FT-IR)
The IR spectrum of Figure 2 shows the signals corresponding to the Si-O bond at ∼1110 cm⁻¹ and O-H bond at ∼3400 cm⁻¹ as the main signals, nevertheless the signal corresponding to the aliphatic chain cannot be seen as the product is mainly inorganic and there is not a high enough concentration for detecting the C-H bond.
   - Solid state ²⁹Si-NMR and ¹³C-NMR:
As can be seen in the STOGA solid state ²⁹Si-NMR spectrum of Figure 3, there are mainly two signals corresponding respectively to Q₃ (100.422 cm⁻¹) and Q₄ ( 110.221 cm⁻¹) and they are characteristic of the silicon when the latter is bound to 3 and 4 silicon atoms, respectively, through an oxygen bridge. It can therefore be concluded that the Sol-Gel reaction takes place entirely by hydrolysis and condensation. Likewise, in the ¹³C-NMR spectrum of Figure 4, the 3 signals corresponding to the 3 carbons of the propyl chain at 9.810 cm⁻¹, 21.561 cm⁻¹, 42.781 cm⁻¹ can be clearly seen.
   - CHNS elemental analysis:
The exact amount of C, H, N and S in the STOGAIP nanoparticles can be determined by the C, H, N, S elemental analysis, i.e., knowing the amount (grams) of amine in the functionalized nanosilica and thus also enabling comparison of
this theoretical data with the experimental data. The obtained results were the following (see table 2):

**Table 2**

| | *Experimental Data* | | *Theoretical data* | |
|---|---|---|---|---|
| C | 6.58% | | | |
| N | 2% | 20mg/1gr NP | | 2.24% 22.4mg/1gr NP |
| H | 2.8% | | | |

Table 2: Results of CHNS elemental analysis (STOGA)

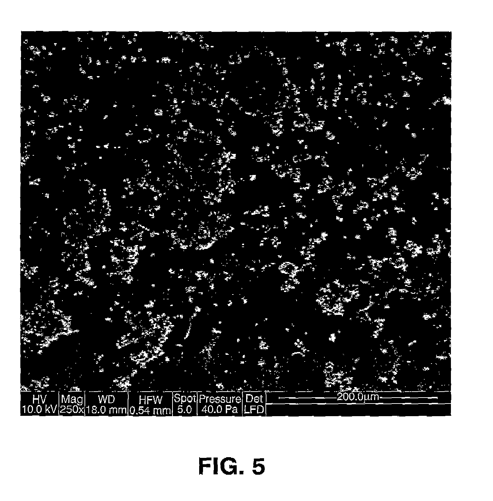

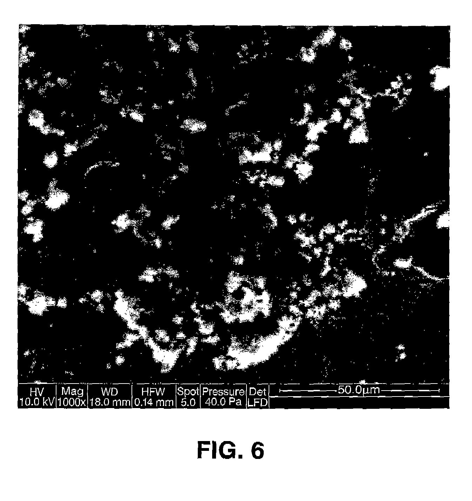

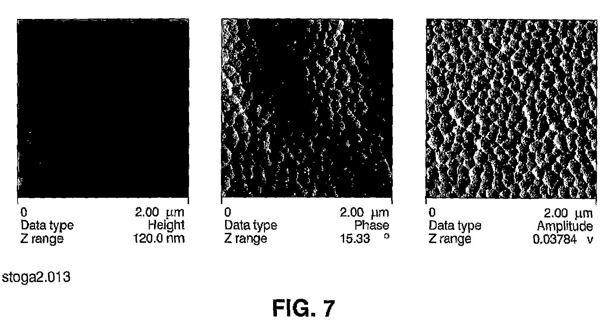

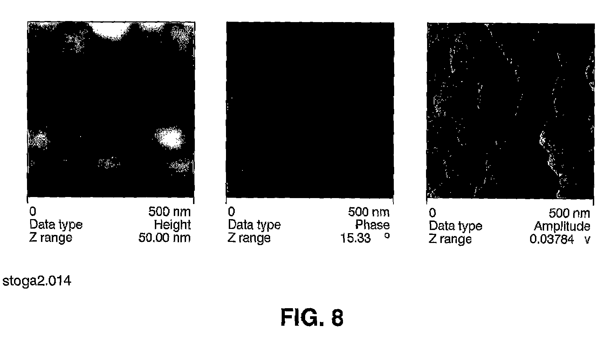

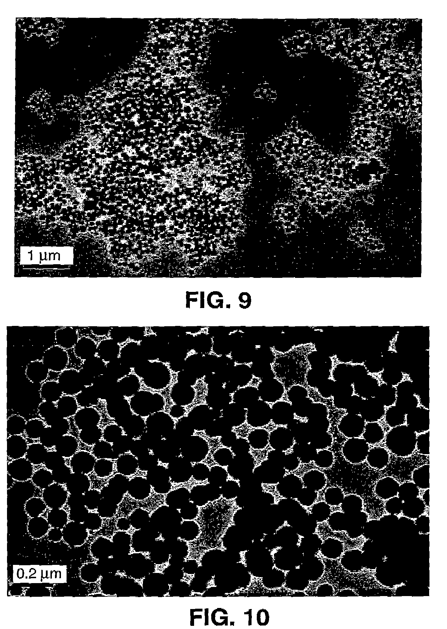

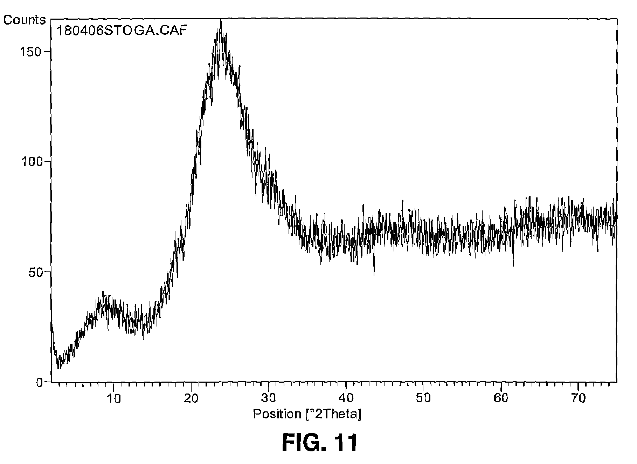

There is almost no loss of the organic group indicating that 89% of the organoalkoxysilane APTES has reacted.
- Environmental scanning electron microscopy (ESEM):
   The STOGA material is aggregated in not so compact heterometric grains with low internal cohesion (see Figures 5 and 6).
- Atomic force microscopy (AFM):
   It has been determined that the size of the obtained nanoparticles (STOGA) was 160 nm by AFM (see Figures 7 and 8).
- Transmission electron microscopy (TEM):
   It has been determined that the size of the obtained nanoparticles (STOGA) was ∼147 nm by TEM (see Figures 9 and 10).
- X-ray diffraction (XRD)
   After interpreting the XRD (see Figure 11) the nonexistence of crystal phases was confirmed, it can therefore be asserted as expected that the nanoparticles are not crystalline.
Zetasizer (ZS) :

**Table 3**

| | T | Z-Ave | Pdl | Intensity Peak 1 | Intensity Peak 2 | Intensity Peak 3 | Peak 1 Int. area | Peak 2 Int. area | Peak 3 Int- area |
|---|---|---|---|---|---|---|---|---|---|
| | | d.nm | | d.nm | d.nm | d.nm | % | % | % |
| Measurements 1-5 | 25 | 218 | 0.087 | 221 | 0 | 0 | 100 | 0 | 0 |
| Stall Dev | 0 | 0.947 | 0.054 | 2,94 | 0 | 0 | 0 | 0 | 0 |
| Minimum | 25 | 217 | 0.021 | 217 | 0 | 0 | 100 | 0 | 0 |
| Maximum | 25 | 219 | 0.163 | 224 | 0 | 0 | 100 | 0 | 0 |

Table 3: Data of the size of nanoparticles with amine functionality (STOGA)

**Table 4**

| | **T (°C)** 25 | **ZP (mV)** | **Mob(µmcm/Vs)** | **Cond (mS/cm)** |
|---|---|---|---|---|
| Measurements | 25 | 50 | -3.92 | 0.0749 |
| 1-5 Stan Dev | 0 | 0.624 | 0.0489 | 0.00178 |
| Minimum | 25 | 50.9 | -3.99 | 0.0732 |
| Maximum | 25 | 43.4 | -3.88 | 0.0773 |

Table 4: Z potential data of nanoparticles with amine functionality (STOGA) dispersion

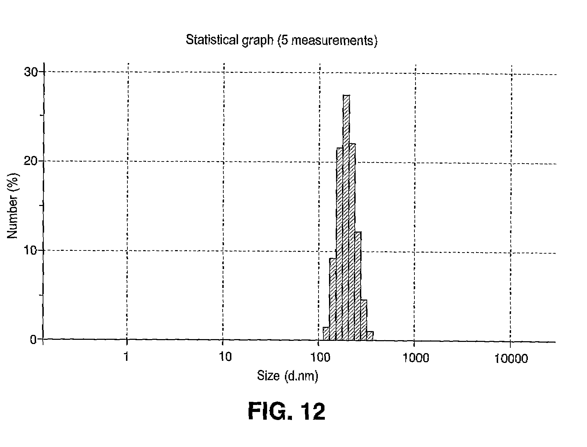

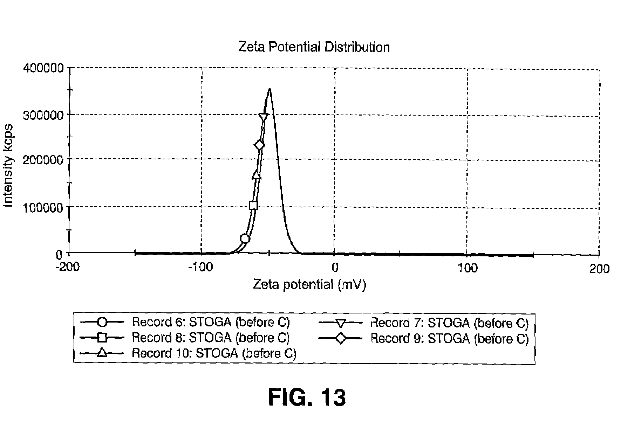

The measurements made in the Zetasizer confirm both the nanometric size of the functionalized nanoparticles specifically 221 nm (see Figure 12), and the stability and non-agglomeration of the dispersion in the reaction mixture itself (Z potential = 50 mv) (see Figure 13).

### Color test (Bromophenol blue):

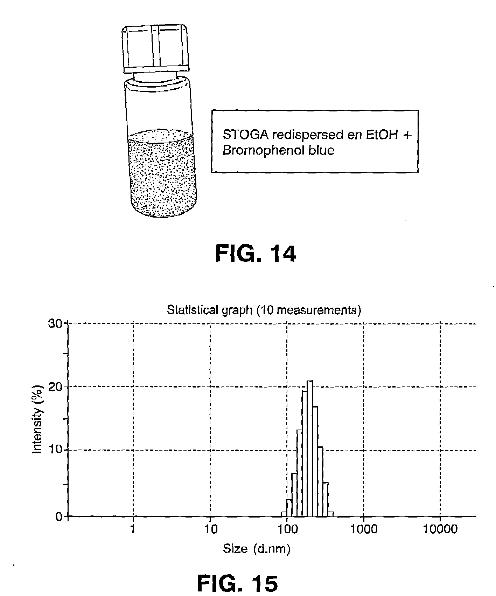

One of the most significant tests to enable corroborating the existence of the amine group is to perform a color test, Figure 14, whereby due to the interaction between the indicator used, in this case bromophenol blue, and the amine group of the synthesized nanoparticle (color change: yellow-blue), the existence of amine functionality of the nanosilica is confirmed. To perform said test, 5 mg of STOGA and 3 ml of ethanol are mixed in a vial, 3 drops of the previously prepared bromophenol blue indicator (yellow) are then added and 1 minute is left to elapse, after 1 minute a color change from yellow to blue can be observed.

Silicon nanoparticles with amine functionality have been obtained. Redispersion of silica nanoparticles with amine functionality (STOGA).

Obtaining silica nanoparticles with amine functionality (STOGA) in aqueous dispersion (without ethanol) is necessary for the subsequent assembly thereof in cement matrices (CSTOGA) because the ethanol present in the initial suspensions is damaging for the hydration of the cement.

To solve this problem, the nanoparticles are prepared by means of centrifugation (30 min. at 4500 r.p.m) and are then washed (redispersed) in EtOH under the use of ultrasounds, repeating said process three times. Thus, the excess solvent is decanted with the final centrifugation and the traces of solvent that may be left behind are evaporated. Once the nanoparticles are dried they are redispersed in H₂O (ultrasounds), the dispersion of nanoparticles (STOGA) in an aqueous medium (20) being produced.

The Zetasizer technique is used to confirm if the silica nanoparticles with amine functionality have been effectively redispersed in the desired solvent (H₂O) after centrifugation.

**Table 5**

| T | Z-Ave | Pdl | Intensity Peak 1 | Intensity Peak 2 | Intensity Peak 3 | Peak 1 Int. area | Peak 2 Int area | Peak 3 Int. area |
|---|---|---|---|---|---|---|---|---|
| | d,nm | | d.nm | d.nm | d.nm | % | % | % |
| Measuremems 1-5 25 | 196 | 0.194 | 194 | 520 | 0 | 99.9 | 0.1 | 0 |
| Stan Dev 0 | 15 | 0.058 | 7.16 | 1640 | 0 | 0.4 | 0.4 | 0 |
| Minimum 25 | 180 | 0.112 | 183 | 0 | 0 | 98.6 | 0 | 0 |
| Maximum 25 | 225 | 0.282 | 207 | 5200 | 0 | 100 | 1.4 | 0 |

Tabl e 5: Data of the size of nanoparticles with amine functionality (STOGA)

**Table 6**

| | **T (°C)** | **ZP (mV)** | **Mob (µmcm/Vs)** | **Cond (mS/cm)** |
|---|---|---|---|---|
| Measurements 1-5 | 25 | -40 | -3.16 | 0.0292 |
| Stan Dev | 0 | 0,7 | 0.0552 | 0.00514 |
| Minimum | 25 | -41 | -321 | 0.0253 |
| Maximum | 25 | -39 | -3.07 | 0.0375 |

Table 6: Z potential data of the dispersion of nanoparticles with amine functionality (STOGA)

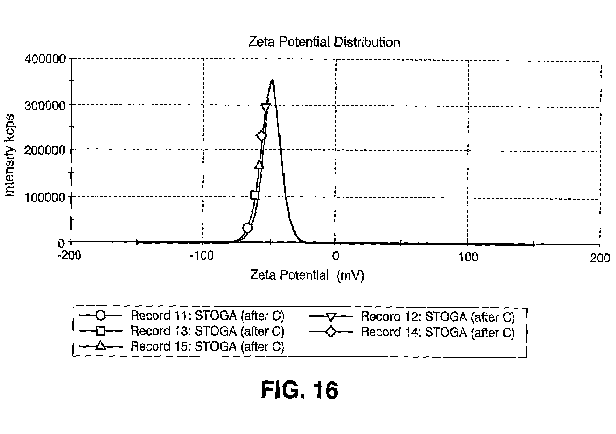

As shown by the graphs of Figures 15 and 16, nanoparticles with amine functionality redispersed in aqueous medium were obtained.

Use of STOGA in water as an additive for clement pastes.

Once the silica nanoparticles with amine functionality (STOGA) were redispersed in water different cement pastes were prepared for the formation of CSTOGA.

### Preparation of cement pastes

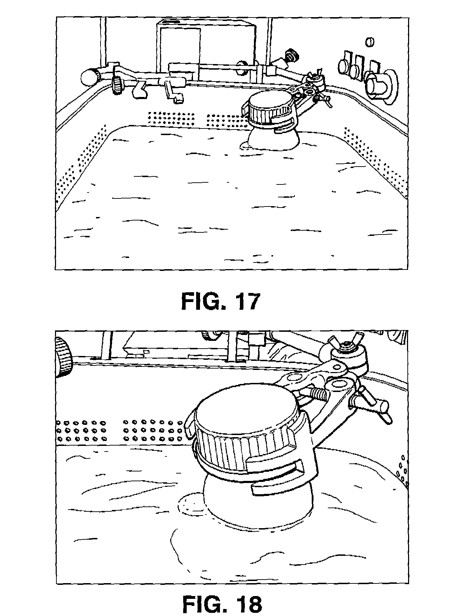

Starting from the completely dry nanoparticles (0, 1, 2, and 3 grams obtained through the already described methodology), distilled water (40 grams) was added and it was put under ultrasound for approximately 3 hours, thus obtaining silica nanoparticles with amine functionality in aqueous dispersion (STOGA) (see Figures 17 and 18).

Subsequently, once said redispersion was achieved, each cement paste was prepared using 100 g of Portland cement (52.5R) to which the previously prepared nanosilica dispersion (40 g H₂O + STOGA) was added. The following stirring parameters were followed to produce said mixture: 750 r.p.m for 1 and a half minutes, then rest for 1 minute and to end, stir again for 1 and a half minutes at 750 r.p.m.

Once the cement paste mixture was produced, cement specimens which would be used for measuring the mechanical properties of the cement matrix were prepared.

### Preparation of cement specimens

To produce specimens of size 10 x 10 x 60 mm the specific molds with said measurements were used and each mold was filled with the previously prepared cement pastes. With the mold completely filled, the specimens were left to cure for 24 hours in an air-conditioned room with a relative humidity of 96 Hr/20°C.

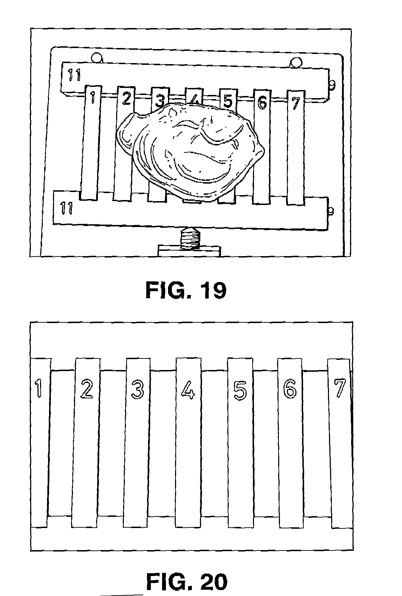

After 24 hours of curing demolding was carried out by submerging the specimens (see Figures 19 and 20) obtained in distilled water for 7 and 28 days, after which breaks under compression were performed.

| I.D. | Addition |
|---|---|
| CSTOGA0 | 0 g STOGA |
| CSTOGA1 | 1 g STOGA |
| CSTOGA2 | 2 g STOGA |
| OSTOGA3 | 3 g STOGA |

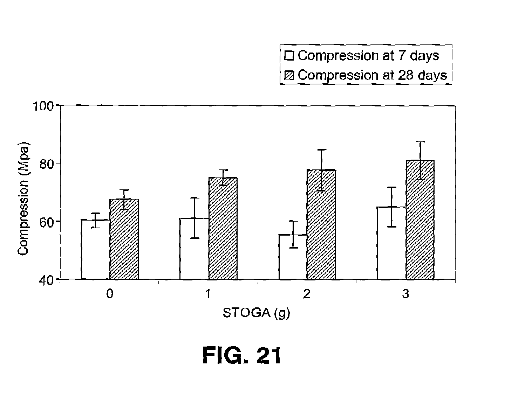

Figure 21 shows the mechanical strength readings offered by these cement materials once the functionalized silica nanoparticles were added.

As seen in Figure 21 with regard to the mechanical strength under compression, a significant increase of the mechanical properties has been achieved because according to the results obtained a gradual increase from 67.58 Mpa for CSTOGA0 (blank) to 81.16 Mpa for CSTOGA3 was achieved, an improvement of 20% being obtained in the mechanical properties.

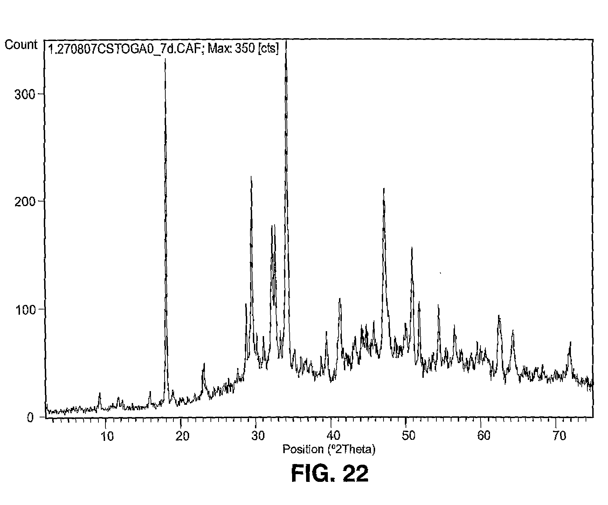

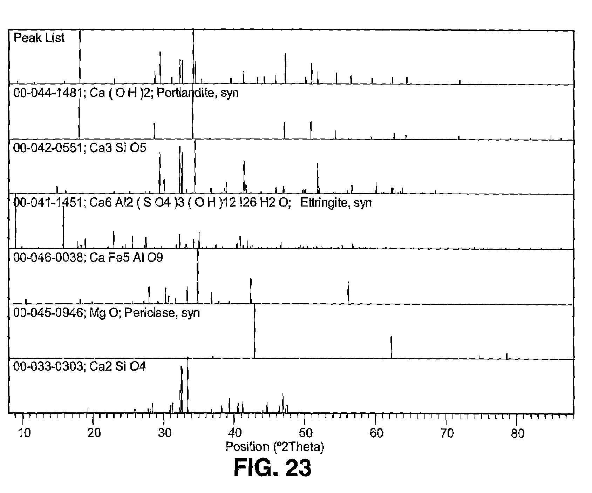

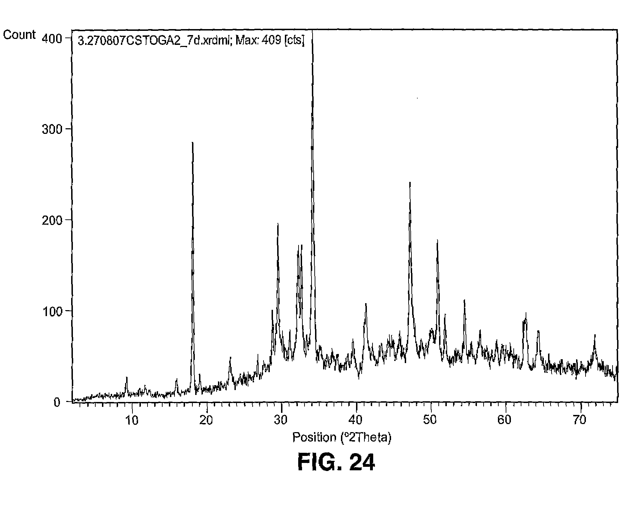

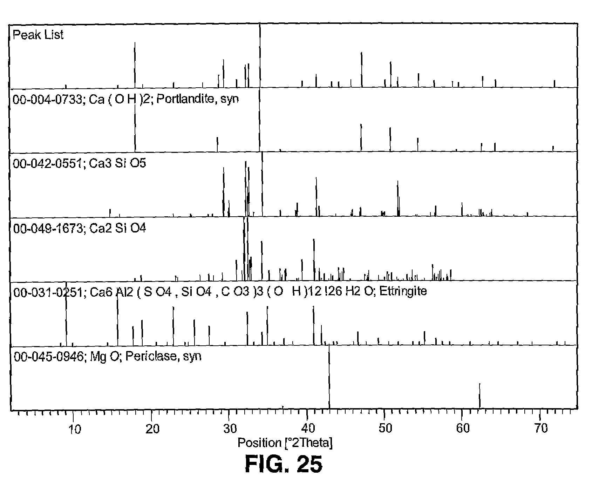

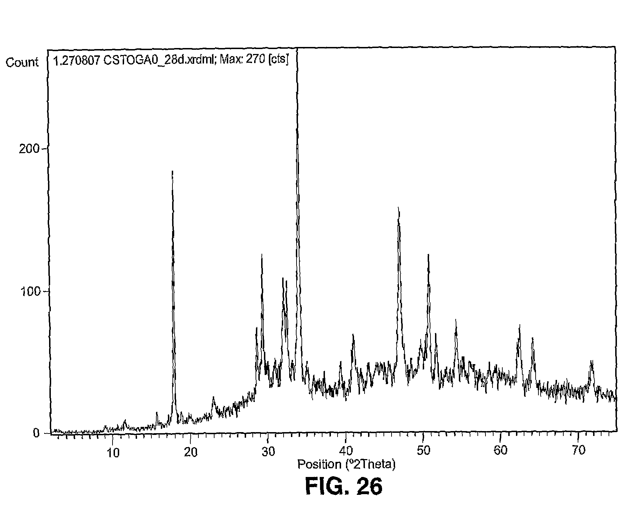

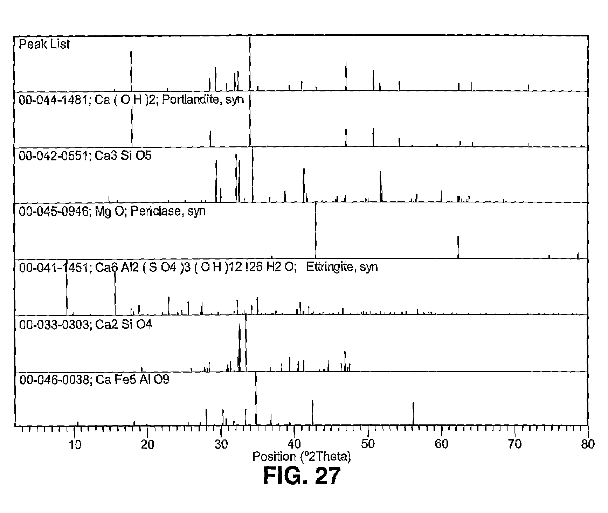

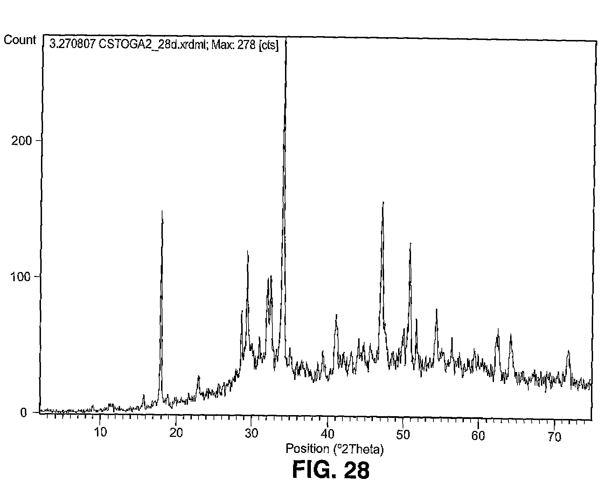

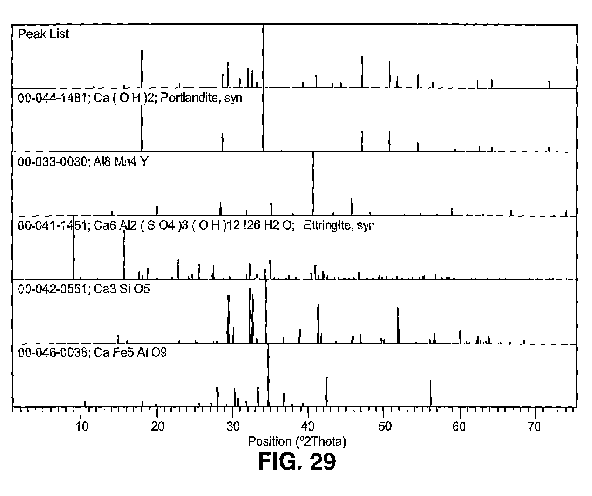

Characterization:
• X-ray diffraction (XRD)
At 7 days of curing see Figures 22-25
At 28 days of curing see Figures 26-29

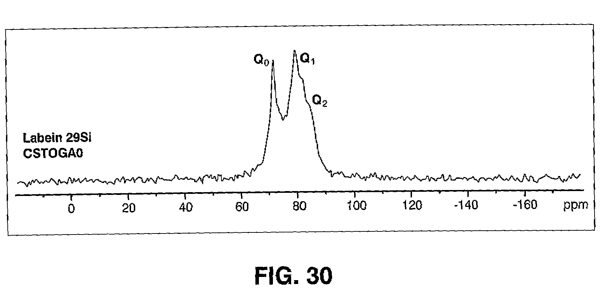

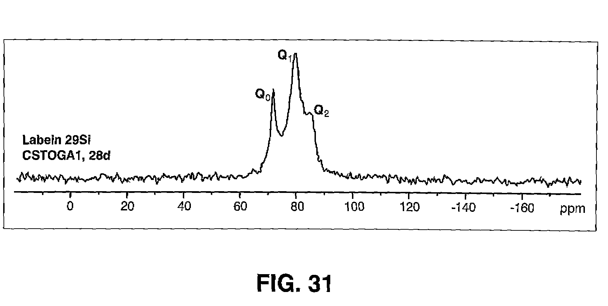

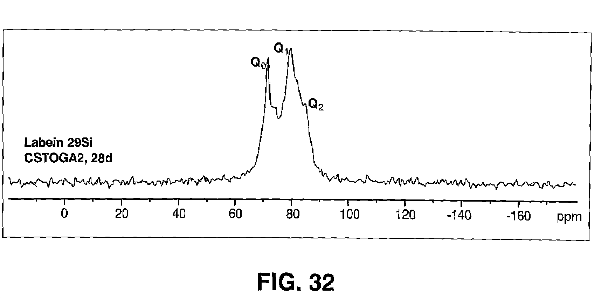

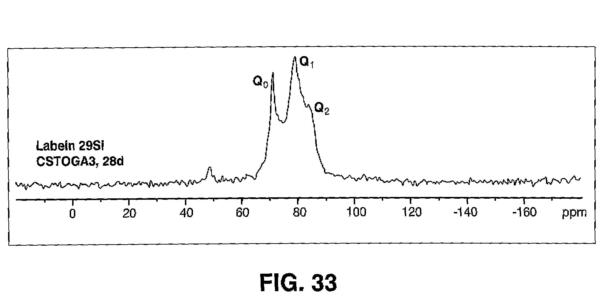

The comparative analysis of the XRD, Figures 22-29, of the cement specimens with STOGA in different proportions and ages demonstrates that there are no significant differences in terms of the type of crystal phases or the relative abundance thereof. ²⁹Si-NMR at 28 days of curing see Figures 30-33

Use of tetraethoxysilane (TEOS) and aminopropyltriethoxysilane (APTES) in water as an additive for cement pastes.

According to Henri Van Damme a way for synthetically creating silicate chains (CSH Gal) is through reaction between TEOS and APTES in ETOH and CaCl₂ (17), so the decision was made to verify if the addition of tetraethoxysilane (TEOS) and aminopropyltriethoxysilane (APTES) to the cement paste caused an increase of the silicate chains.

Therefore, various batches (through the mechanism described in the preceding section) containing the amount of TEOS and APTES proportional to that added during the synthesis of STOGA for 0, 1 , 2, and 3 grams were prepared.

| **Sample ID** | **TEOS (ml)** | **AFTES (ml)** |
|---|---|---|
| CTEOSGA0 | 0 | 0 |
| CTEOSGA1 | 3.2 | 0.33 |
| GTEO8GA2 | 6.4 | 0-66 |
| CTEOSGA3 | 9.6 | 1 |

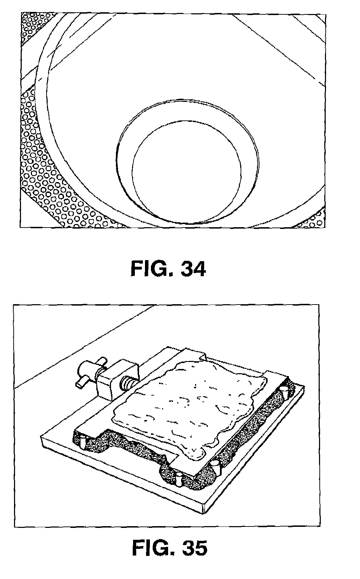

At first glance it can be seen that the mixture between 40 gram of water which in turn contained TEOS and APTES, together with 100 gram of Portland cement, formed two well distinguished phases since the ethanol formed during the hydrolysis of TEOS and APTES in water did not mix with the cement paste as can be seen in Figure 34 and 35.

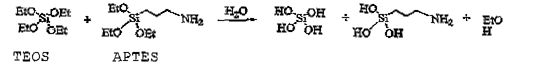

Hydrolysis between TEOS and APTES

Before performing the breaks at 7 and 28 days, it can be seen that during the demolding the cured specimens are much softer than the specimens prepared by the addition of silica nanoparticles with amine functionality, which demonstrates why it is Sole Partner important to add these substrates in the form of functionalized nanosilica and thus achieve silicate chain growth.

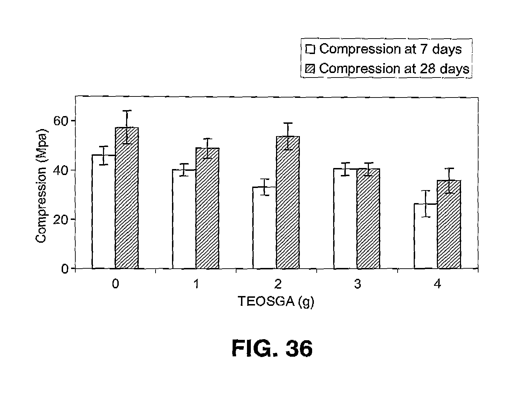

Figure 36 shows the mechanical strength readings offered by these cement materials once corresponding alkoxysilanes were added.

As seen in Figure 36 with respect to the mechanical strength under compression, in no case are the mechanical properties improved, obtaining a reduction of said strengths instead.

### Literature

1. Activity Report, Cembureau (2002).
2. N. J. Clayden et al., "Hydration of tricalcium silicate followed by solid-state Si29 NMR-spectroscopy". J. Chem. Soc. Chem. Comm., 21, 1396-1397, (1984).; X. Cong And R. J. Kirkpatrick; "0-17 and Si-29 MAS NMR-study of beta-C2S hydration and the structure of calcium-silicate hydrates" Cem. Concr. Res. 23, 1065-1077, (1993).
3. D. Glasser et al., "Identification of some of the polysilicate components of trimethylsilylated cement paste". Cem. Concr. Res. 11, 775-780, (1981).
4. H. Hirljac et al., "Silicate polymerization during the hydration of alite". Cem. Concr. Res., 13, 877-886, (1983).
5. K. Moan and H. F. W. Taylor, "A trimethylsilylation study of tricalcium silicate pastes". Cem. Concr. Res. 12, 25-31, (1982).
6. H. Uchikawa and R. Furuta, "Hydration of C3S-pozzolana paste estimated by trimethylsilylatiori". Cem. Concr. Res. 11, 65-78, (1981).
7. Y. R. de Miguel et al., "Silica Chain Growth in C-S-H Gel". Nanoteohnology for Construction Materials Workshop. Ottawa. 30th September (2004).
8. J. S. Dolado et al., "A Molecular Dynamic study of Cementitious Calcium Silicate Hydrate gel". J. Am. Ceram. Soc, 90, 3938-3942, (2007); J. S. Dolado et al., "Silica Chain Growth in C-S-H Gel: An Ab-lnitio Study". Current Challenges in The Integration of Computational Modelling and Mioro/Nano Characterisation of Cementitious Materials, Glasgow (UK), January (2005).
9. A. Ayuela et al., "Silicate Chain Formation in the Nanostructure of Cement-based Materials". J. Chem. Phys., 127, 164710 (2007).; A. Ayuela et al., "Silicate Chain Formation in the Nanostructure of Cement-Based Material". NANO 2006 Workshop: Perspectives in Nanoscience and Nanoteehnology. San Seabastian, September (2006); A. Ayuela et al., "Silicate chain formation in the nanostructure of cement-based materials". 3rd Nanospain Workshop, Pamplona, March (2006).
10. P. Rossi., "Ultra-High Performance Fiber-Reiriforced Concretes". Concrete International, December (2001).
11. P. Fidjesto and R. Lewis., Chapter 12 in Lea's Chemistry of Cement and Concrete. Arnold Publishers, London (Isbn 0 340 56589 6), 1998; S. Helland et al., Fip State of the Art Report, Thomas Teldford, London, (Isbn 0 72722 1373 6), 37 pp, (1988).
12. S. Chandra and H. Bergqvist, Proc. Int. Congr. Chem. Cem. Vol. 3, 3ii106, 6pp, (1997).
13. J. Bastien et al., "Cement grout containing precipitated silica and superplasticizers for post-tensioning". Acid Materials Journal, 94, 291-295, (1997).
14. Bjordal. et al., Proceedings of Offshore Europe 93 Published by The Society of Petroleum Engineers, 431, (1993).
15. H. Van Damme et al., "Cement-polymer and clay-polymer nano- and meso-composites: spotting the difference". J. Mater. Chem., 12, 3308-3315, (2002).
16. J. Minet et al. "New Layered Calcium Organosilicate Hybrids with Covalently Linked Organic Functionalities". Chem. Matter. 16, 3955-3962, (2004).
17. J. Minet et al., "Organic calcium silicate hydrate hybrids: a new approach to cement based nanocomposites". J. Mater. Chem, 16, 1379-1383, (2006).
18. A. Franceschini et al., "New covalent bonded polymer-calcium silicate hydrate composites". J. Mater. Chem., 17, 913-922, (2007).
19. W. Stöber et al., "Controlled growth of monodisperse silica spheres in micron size range " J. Colloid Inteface Sci, 26, 62-69 (1968).

## Claims

1. A hydraulic cement composition comprising a mixture of Portland type cement and 0.5% to 10% of organosilicon molecules.

2. The hydraulic cement composition according to claim 1, **characterized in that** the organosilicon molecules are nanoparticles with a size of 10 to 500 nm.

3. The hydraulic cement composition according to claims 1-2, **characterized in that** the organosilicon molecules are nanoparticles with a size of 221 nm.

4. The hydraulic cement composition according to claims 1-3, **characterized in that** the binding of the organosilicon molecules to the cement matrix is done by hybridization.

5. The hydraulic cement composition according to claims 1-4, **characterized in that** the organic molecules bound to the silicon have an amine group.

6. The hydraulic cement composition according to claims 1-5, **characterized in that** the amines used to form the silicon nanoparticles are 3-aminopropyltriethoxysilane (APTES).

7. A method for obtaining the hydraulic cement composition according to claims 1 to 6, **characterized in that** the following two steps are performed;
a) obtaining silica nanoparticles with amine functionality, purified and redispersed in water, and
b) hybridizing the particles obtained in (a) with the cement matrix.

8. The method for obtaining the hydraulic cement composition according to claim 7, **characterized in that** the organosilica nanoparticles obtained through reaction between tetraethoxysilane and triethoxyaminosilane in an ethanol/water solution in the presence of ammonium hydroxide as a catalyst, they are isolated and purified removing all the ethanol and they are subsequently dispersed in water for reaction thereof with the cement mixture.

9. The method for obtaining the hydraulic cement composition according to claims 7-8, **characterized in that** the triethoxyaminosilane is triethoxyaminopropylsilane.

10. The method for obtaining the hydraulic cement composition according to claims 7-9, **characterized in that** once the aminopropylsilane molecules (STOGA) are dispersed in water, they react by hybridizing with the cement mixture.

11. Use of the hydraulic cement according to claims 1 to 6 obtained by the method according to claims 7 to 10, **characterized in that** at 28 days there is an improvement of at least 10% in the mechanical properties as compared with the same cement which is not hybridized with the organosilicon nanoparticles.

12. Use of the hydraulic cement according to claims 1 to 6 obtained by the method according to claims 7 to 10, **characterized in that** at 28 days there is an improvement of at least 15% in the mechanical properties as compared with the same cement which is not hybridized with the organosilicon nanoparticles.

13. Use of the hydraulic cement according to claims 1 to 6 obtained by the method according to claims 7 to 10, **characterized in that** at 28 days there is an improvement of at least 20% in the mechanical properties as compared with the same cement which is not hybridized with the organosilicon nanoparticles.
